# EUROPÄISCHE PATENTSCHRIFT

(11) **EP 2 145 365 B1**
(45) Veröffentlichungstag und Bekanntmachung des Hinweises auf die Patenterteilung: **29.05.2013**
(21) Anmeldenummer: 08736220.8
(22) Anmeldetag: 15.04.2008
(51) Int. Cl.: H02B 1/28

(54) **SCHOTTVORRICHTUNG FÜR EINE STROMVERTEILEREINHEIT**
PARTITION APPARATUS FOR AN ELECTRICAL POWER DISTRIBUTOR UNIT
DISPOSITIF DE CLOISONNEMENT POUR UNE UNITÉ DE DISTRIBUTION DE COURANT

(30) Priorität: 04.05.2007 DE 102007022363
(43) Veröffentlichungstag der Anmeldung: 20.01.2010
(73) Patentinhaber: Siemens Aktiengesellschaft, 80333 München (DE)
(72) Erfinder: BAYER, Jürgen, 04509 Neukyhna (DE); CIHLAR, Michaela, 04207 Leipzig (DE)
(86) Internationale Anmeldenummer: PCT/EP2008/054526
(87) Internationale Veröffentlichungsnummer: WO 2008/135347

(56) Entgegenhaltungen:
- DD-A1- 280 638

## Beschreibung

Die Erfindung betrifft eine Schottvorrichtung für eine Stromverteilereinheit.

Beim Auftreten von Störlichtbögen in belüfteten Stromverteilereinheiten treten heiße Gase beispielsweise durch die Lüftungsöffnungen von Türen im Frontbereich oder durch Lüftungsöffnungen anderer Umhüllungsteile der Stromverteilereinheit aus und können zu Personenschäden führen. Deshalb sind Vorrichtungen notwendig, die das Austreten der Gase im Störlichtbogenfall verhindern, aber unter normalen Betriebsbedingungen der Stromverteilereinheit einen ausreichen starken Luftstrom durch die Lüftungsöffnungen zur Kühlung der Stromverteilereinheit gewährleisten.

Eine dazu geeignete Vorrichtung ist beispielsweise aus der Druckschrift DD 280 638 A1 bekannt. Diese zeigt eine Schottvorrichtung für eine Stromverteilereinheit, mit Schottmitteln zum Hinterlegen eines mit Lüftungsöffnungen versehenen Umhüllungsteiles der Stromverteilereinheit, insbesondere einer Schaltfeldtür, wobei die Schottmittel derart ausgebildet sind, dass sie unter normalen Betriebsbedingungen einen Luftstrom durch die Lüftungsöffnungen hindurch ins Innere der Stromverteilereinheit oder aus dem Inneren der Stromverteilereinheit gewährleisten und im Störfall unter dem Einfluss einer Druckwelle die Lüftungsöffnungen so abdecken, dass die Druckwelle und heißen Gase stark vermindert nach außen geleitet werden. - Dabei sind die Schottmittel als Metallsiebgewebe ausgebildet.

Aufgabe der Erfindung ist es, eine Schottvorrichtung mit den Merkmalen des Oberbegriffes des Patentanspruches 1 (DD 280 638 A1 dahingehend weiterzubilden, dass sie widerstandsfähiger gegen mechanische Beschädigung ist.

Diese Ausgabe wird gemäß der Erfindung dadurch gelöst, dass als Schottmittel zumindest ein erstes Schottblech und ein zweites Schottblech vorgesehen sind, die jeweils mit Durchgangsöffnungen versehen und übereinander angeordnet sind, wobei die beiden Schottbleche ausgehend von dem mit den Lüftungsöffnungen versehenen Umhüllungsteil unterschiedlich stark konvex gekrümmt sind, und wobei die Krümmungsradien (die Krümmungen) der Schottbleche unter dem Einfluss der Druckwelle veränderbar sind.

Durch die Verwendung von gekrümmten, und damit schwer verformbaren Schottblechen anstelle von Metallsiebgeweben ist nunmehr sichergestellt, dass bei einem zufälligen dagegen Schlagen während Wartungs- oder Installationsarbeiten die Schottmittel ihre Form und Lage beibehalten.

Vorzugsweise ist dabei über den beiden Schottblechen ein drittes Schottblech angeordnet ist, dass ebenfalls konvex gekrümmt und mit Durchgangsöffnungen versehen ist.

Um die Notwendigkeit einer Lagekontrolle der neuen Schottvorrichtung noch besser auszuschließen zu können ist vorgesehen, dass zumindest jeweils ein senkrecht zum Krümmungsradius verlaufender erster Kantenabschnitt der Schottbleche ortsfest an dem Umhüllungsteil gehalten ist. - Die neue Schottvorrichtung ist dadurch im Wesentlichen wartungsfrei.

Auf einfache Weise kann die Änderung der Krümmungsradien der Schottbleche dadurch realisiert werden, dass jeweils ein senkrecht zum Krümmungsradius verlaufende zweiter Kantenabschnitt des ersten und des zweiten Schottbleches verschiebbar an dem Umhüllungsteil gehalten ist.

Um die Schottbleche im Störfall durch ein Aufweiten ihrer Krümmung möglichst schnell gegeneinander zu verschieben ist es vorteilhaft, wenn die zweiten Kantenabschnitte in entgegen gesetzten Richtungen verschiebbar sind.

Damit eine Gefährdung von Personen im Störfall sicher ausgeschlossen werden kann ist vorgesehen, dass die Durchgangsöffnungen der verschiedenen Schottbleche derart angeordnet sind, dass sie im Störfall einen größeren Versatz zueinander aufweisen als unter normalen Betriebsbedingungen. Dabei wird im Störfall ein Versatz angestrebt, der so groß ist, dass die Schottbleche ihre Durchgangsöffnungen gegenseitig nahezu verschließen.

Um den Druckabbau im Störfall kontrollierter zu gestalten ist vorgesehen, dass die Durchgangsöffnungen bei jedem der Schottbleche jeweils in mehreren, vorzugsweise sechs Teilflächen der Mantelfläche des Schottbleches konzentriert sind, wobei einander zugeordnete dieser Teilflächen der verschiedenen Schottbleche im Wesentlichen übereinander liegen. - Bei einer bevorzugten Ausgestaltung der neuen Schottvorrichtung ist dabei vorgesehen, dass bei jedem der Schottbleche die Summe seiner Teilflächen, in denen die Durchgangsöffnungen konzentriert sind, geringer als 1/10 der gesamten Mantelfläche des Schottbleches ist.

Um einen unkontrollierten Luftstrom über die offenen Stirnseiten der Schottbleche auszuschließen weist die neue Schottvorrichtung zwei sich senkrecht zu den Schottblechen erstreckende, Seitenschotts auf, die diese Stirnseiten abdecken. - Um die Seitenschotts auf einfache Weise an dem Umhüllungsteil befestigen zu können, weisen sie jeweils zumindest eine erste, an dem Umhüllungsteil unmittelbar oder mittelbar abgestützte Abkantung auf.

Zur weiteren Erhöhung der Stabilität der neuen Schottvorrichtung ist es vorteilhaft, wenn die Seitenschotts jeweils zumindest eine zweite Abkantung zum Übergreifen der Schottbleche aufweisen.

Die neue Schottvorrichtung ist insbesondere bei Schaltfeldern, einsetzbar, die frontseitig eine mit Lüftungsöffnungen versehenen Schaltfeldtür aufweisen, um im Störfall in Frontbereich der Stromverteilereinheit Personenschäden zu vermeiden.

Die Erfindung soll nachfolgend zum besseren Verständnis anhand eines in der Zeichnung dargestellten, den Schutzumfang der Erfindung nicht einschränkenden Ausführungsbeispiels näher erläutert werden. Dabei zeigen:
- Figur 1: eine perspektivische Darstellung einer Stromverteilereinheit in Form eines Schaltfeldes, mit Rahmen und Umhüllungsteilen, wobei eines der Umhüllungsteile eine frontseitige Schaltfeldtür ist, an deren Innenseite eine Schottvorrichtung angeordnet ist,
- Figur 2: eine vergrößerte perspektivische Darstellung eines Ausschnitts aus Figur 1, der die Schottvorrichtung zeigt
- Figur 3: der Ausschnitt gemäß der Figur 2 in Vorderansicht und
- Figur 4 bis 8: verschiedene Ansichten und Ausschnitte der neuen Schottvorrichtung und

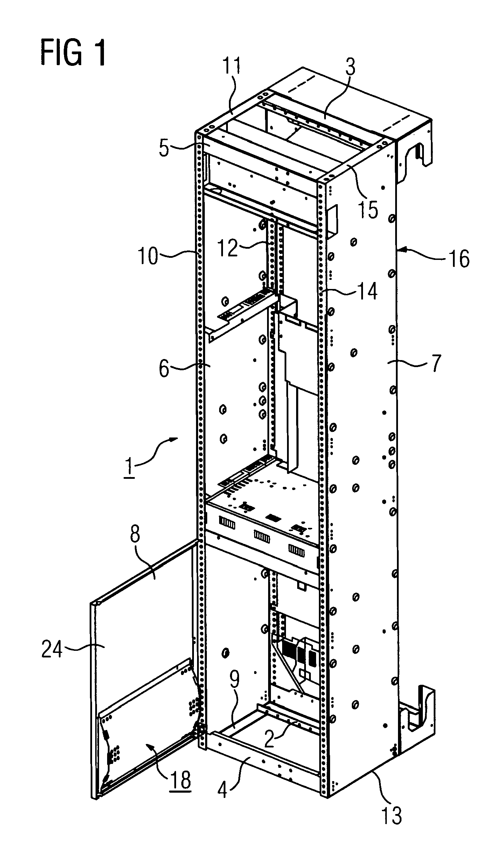

Die Figur 1 zeigt eine Stromverteilereinheit 1 in Form eines Schaltfeldes einer in der Stromverteilertechnik auch als Punktverteiler bekannten Schaltanlage. Das Schaltfeld 1 weist einen Rahmen und eine Umhüllung für den Rahmen auf.

So besteht der gezeigte Rahmen aus zwei rückseitigen, horizontal verlaufenden Rahmenprofilen 2, 3 und zwei frontseitig, horizontal verlaufenden Rahmenprofilen 4 und 5.

Die Umhüllung weist zwei vertikal verlaufende Seitenwände 6 und 7 in Form von Beplankungsblechen und ein an der Seitenwand 6 schwenkbar gehaltenes Umhüllungsteil 8 in Form einer Schaltfeldtür auf. Weitere Umhüllungsteile sind vorgesehen, jedoch nicht dargestellt.

Die Seitenwände 6 und 7 weisen Abkantungen 9 bis 12 bzw. 13 bis 16 auf, die zur Verbindung mit den Rahmenprofilen 2 bis 5 dienen.

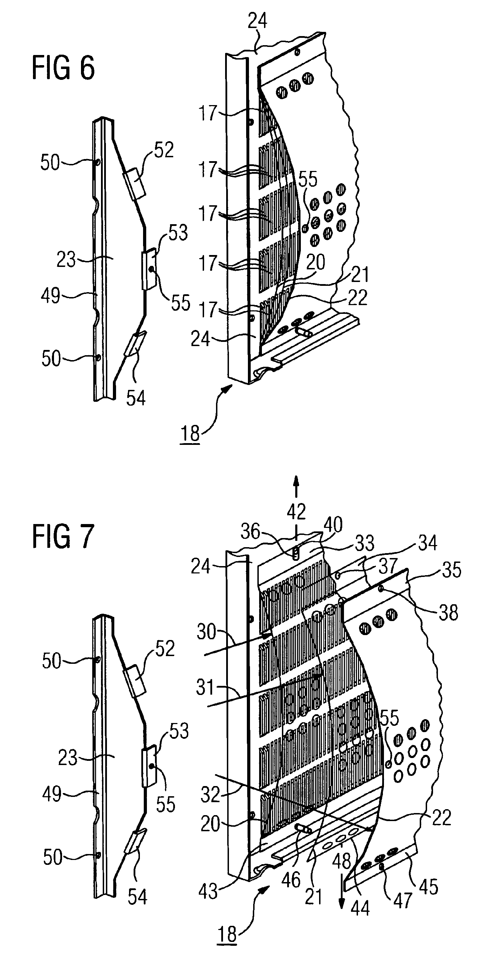

An der Innenseite 24 der Schaltfeldtür, ist im Bereich von Lüftungsöffnungen 17 der Schaltschranktür 8 (vgl. Figuren 6 bis 8) eine Schottvorrichtung 18 angeordnet.

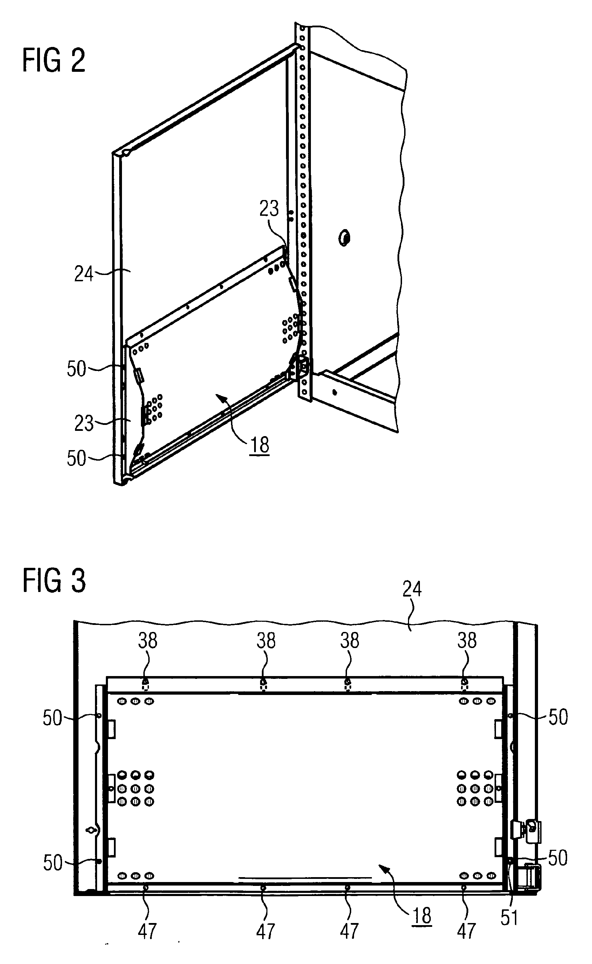

Die Figuren 2 bis 7 verdeutlichen, wie die Schottvorrichtung 18 aufgebaut und an der Innenseite der Schaltschranktür montiert ist.

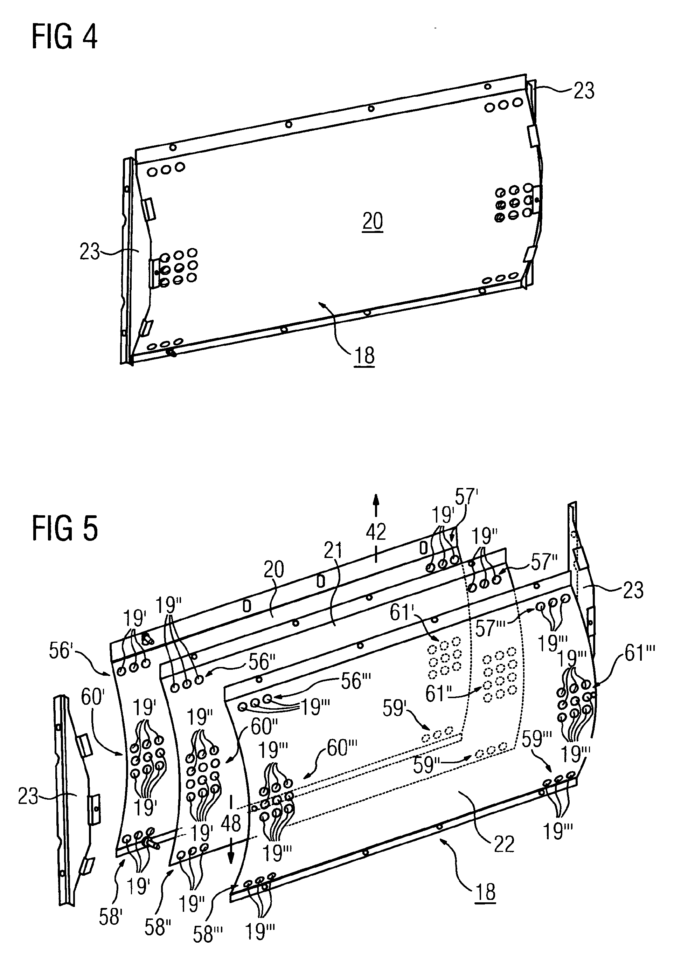

So weist die Schottvorrichtung 18 gemäß der Figur 5 fünf Schottmitteln in Form von drei mit Durchgangsöffnungen 19', 19" 19"' versehenen, gekrümmten Schottblechen 20, 21 sowie 22 und zwei Seitenschotts 23 auf, wobei die Schottbleche übereinander angeordnet (sozusagen ineinander geschachtelt) sind und wobei die Seitenschotts senkrecht zu den Schottblechen 20, 21 und 22 verlaufen.

Somit hat die Schottvorrichtung 18 gemäß der Figur 4 im zusammengebauten Zustand die Form eines parallel zu seiner Längsachse geschnittenen Teilzylinders, wobei die Schottbleche 20, 21 und 22 ineinander geschachtelte gekrümmte Mantelflächen und die Seitenschotts Deckflächen dieses Teilzylinders bilden.

Gemäß der Figuren 6 und 7 werden die drei Schottbleche 20, 21 und 22 an der Innenseite 24 der Schaltschranktür montiert. Dabei sind zum besseren Verständnis in diesen beiden Figuren das erste und das zweite Schottblech transparent dargestellt.

Die Schottbleche weisen einerseits jeweils einen sich senkrecht zu ihren Krümmungsradien 30, 31 und 32 erstreckenden oberen erster Kantenabschnitt 33, 34 und 35 auf. Diese ersten oberen Kantenabschnitte 33, 34 und 35 verlaufen parallel zur Innenseite (24) der Schaltfeldtür und sind - mit ersten Befestigungsöffnungen 36, 37 bzw. 38 zur Aufnahme von Befestigungsmitteln versehen. Entsprechend weist die Schaltschranktür zugeordnete erste Befestigungsöffnungen 40 (vgl. Figur 5) auf. Als Befestigungsmittel sind hierbei vorzugsweise Schraubverbindungen vorgesehen, wobei Schrauben 41 die ersten Befestigungsöffnungen 36, 37, 38 und 40 durchgreifen und an ihrem freien Ende mit nicht weiter dargestellten Muttern versehen sind.

Die ersten Befestigungslöcher 36 des der Innenseite 24 der Schaltschranktür am nächsten liegenden ersten (also inneren) Schottbleches 20 sind als Langlöcher ausgebildet. Das über dem ersten Schottblech 20 angeordnete zweiten Schottbleches (also mittlere) Schottblech 21 und das über dem zweiten Schottblech angeordnete dritte Schottblech(also äußere) Schottblech 22 weisen kreisförmige Durchgangsbohrungen als erste Befestigungslöcher 37 und 38 auf. Damit sind das zweite Schottblech 21 und das dritte Schottblech 22 im Bereich des ersten Kantenabschnitts 34 bzw. 35 ortsfest an der Innenseite 24 der Schaltschranktür gehalten, während das erste Schottblech 20 beim Aufbiegen seiner Krümmung in Richtung des Pfeils 42 nach oben verschoben werden kann.

Andererseits weisen die Schottbleche 20 bis 22 jeweils einen sich senkrecht zu ihren Krümmungsradien 30, 31 bzw. 32 erstreckenden unteren zweiten Kantenabschnitt 43, 44 bzw. 45 auf. Die unteren zweiten Kantenabschnitte 43 und 45 des ersten und des dritten Schottblechs verlaufen ebenfalls parallel zur Innenseite 24 der Schaltfeldtür und sind mit zweiten Befestigungsöffnungen 46 bzw. 47 in Form kreisförmige Durchgangsbohrungen versehen, so dass das erste und das dritte Schottblech im Bereich des unteren zweiten Kantenabschnittes ortsfest an der Schaltschranktür gehalten sind, während das mittlere zweite Schottblech 21, dass nach unten kürzer als die beiden anderen Schottbleche 20 und 22 ausgebildet ist, beim Aufbiegen seines Krümmung in Richtung des Pfeils 48 nach unten verschoben werden kann.

Ein unkontrollierter Luftstrom über die offenen Stirnseiten der Schottbleche wird durch die zwei Seitenschotts 23 auf einfache Weise ausgeschlossen. Diese beiden identischen Seitenschotts 23 weisen jeweils eine erste, an der Schaltschranktür abgestützte Abkantung 49 auf. Diese Abkantungen 49 und die Schaltschranktür sind mit einander zugeordneten Befestigungslöchern 50 versehen, so dass die Seitenschotts mittels Befestigungsmittel 51 (vgl. Figur 3) in Form von Schraubverbindungen an der Schaltschranktür befestigt sind. Zur weiteren Erhöhung der Stabilität der neuen Schottvorrichtung sind die Seitenschotts 23 jeweils mit zweiten Abkantungen 52 bis 54 zum Übergreifen der Schottbleche versehen. Jeweils eine dieser Abkantungen 53 der Seitenschotts und das dritte äußere Schottblech 22 sind mit korrespondierenden Befestigungslöchern 55 versehen, so dass das dritte Schottblech 22 mittels Schraubverbindungen an den beiden Seitenschotts 23 fixiert ist. Dieses dritte Schottblech 22 ist dicker als die beiden anderen Schottbleche ausgebildet. So weisen die Schottbleche eine Materialstärke von beispielsweise 0,5 mm auf, währen das dritte Schottblech 22 doppelt so dick ist (1 mm).

Da bei benachbarten der Schottbleche, das jeweils weiter außen liegende eine größere Krümmung aufweist, d.h. da ausgehend von der Innenseite der Schaltschranktür in Richtung des Schaltschrankinnenraumes das innere erste Schottblech 20 den größten Krümmungsradius 30 (die kleinste Krümmung) und das äußere dritte Schottblech 22 den geringsten Krümmungsradius 32 (die größte Krümmung) aufweist, sind die Schottbleche im Bereich Ihrer Krümmungen so weit zueinander beabstandet, dass unter normalen Betriebsbedingungen der Stromverteilereinheit, bei der sich die Schottvorrichtung in ihrer Ausgangslage befindet, ein vorgegebener Luftstrom zur Kühlung der Stromverteilereinheit gewährleisten ist.

Im Lichtbogen-Störfall wirkt die dabei entstehende Druckwelle zuerst auf das äußere dritte Schottblech 22, dringt durch dessen Durchgangsöffnungen 19"' und wirkt auf das mittlere zweite 21 und anschließend auf das innere erste Schottblech 20. Während das dritte Schottblech 22 dabei seine Form und Lage aufgrund der vierseitigen ortsfesten Fixierung nicht verändert, bewirkt die Druckwelle beim zweiten 21 und ersten 20 Schottblech ein Aufbiegen ihrer Krümmungen und ein Verschieben in die entgegen gesetzten Richtungen 42 bzw. 48. Das zweite 21 und das erste 20 Schottblech werden im Lichtbogen-Störfall durch den auftretenden Druck also so verformt, dass sie sich gegenseitig verschieben.

Die Durchgangsöffnungen 19', 19" uns 19'" der verschiedenen Schottbleche 20, 21 und 22 sind derart angeordnet, dass sie im Störfall (also in ihrer Endlage) einen größeren Versatz zueinander aufweisen als unter normalen Betriebsbedingungen (in ihrer Ausgangslage). Dabei wird im Störfall ein Versatz angestrebt, der so groß ist, dass die Schottbleche ihre Durchgangsöffnungen 19', 19", 19'" und damit auch die Lüftungsöffnungen 17 der Schaltschranktür gegenseitig nahezu verschließen.

Um dies zu gewährleisten sind die Durchgangsöffnungen 19', 19" und 19'" bei jedem der Schottbleche gemäß der Figur 5 jeweils in sechs Teilflächen 56' bis 61', 56" bis 61" und 56"' bis 61'" der Mantelfläche des Schottbleches konzentriert, wobei einander zugeordnete dieser Teilflächen 56', 56" und 56"' bis 61', 61 " und 61'" der verschiedenen Schottbleche im Wesentlichen übereinander liegen.

Wie insbesondere in der 5 dargestellt, weisen die Schottbleche des gezeigten Ausführungsbeispiels je zwei obere Teilflächen 56' und 57', 56" und 57", 56'" und 57'" mit jeweils 3 Durchgangsöffnungen 19, zwei untere Teilflächen 58' und 59', 58" und 59", 58'" und 59'" mit jeweils drei Durchgangsöffnungen 19 und zwei mittlere Teilflächen 60' und 61', 60" und 61", 60'" und 61'" auf. Dabei konzentrieren sich die Teilflächen in den seitlichen Mantelabschnitten, die den Seitenschotts zugewandt sind. Zwischen ihnen ist ein großer Abschnitt der Mantelfläche frei von Durchgangsöffnungen. Während das erste 20 und das dritte Schottblech 22 neun Durchgangsöffnungen 19 in den mittleren Teilbereichen 60' und 61' bzw. 60'" und 61'" aufweisen, sind beim zweiten Schottblech in den mittleren Teilbereichen 60" und 61" zwölf Durchgangsöffnungen 19 vorgesehen.

Die Summe der Teilflächen 56' bis 61', 56" bis 61" bzw. 56"' bis 61'" der einzelnen Schottbleche, in denen die Durchgangsöffnungen 19 konzentriert sind, ist im gezeigten Ausführungsbeispiel geringer als 1/10 der gesamten Mantelfläche des jeweiligen Schottblechs.

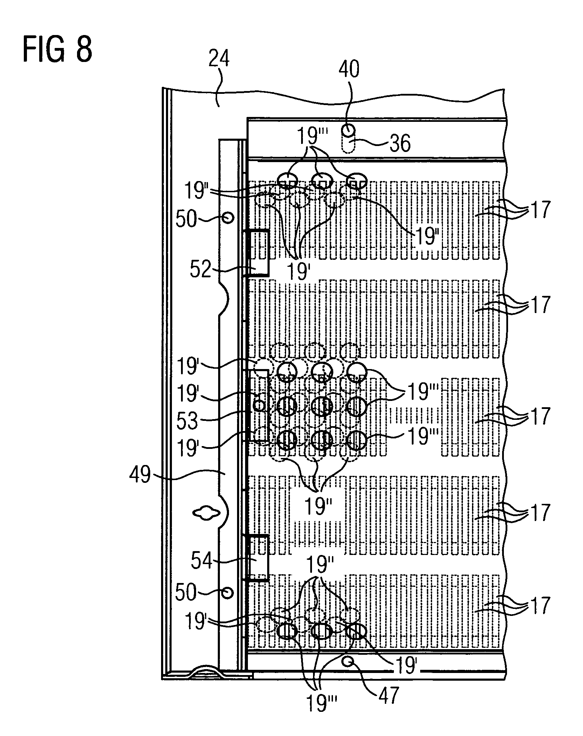

Die Lage der Durchgangsöffnungen 19 in der Ausgangslage ist in der Figur 8 dargestellt. Sie sind dabei sowohl vertikal als auch horizontal zueinander versetzt.

Horizontal liegen die Durchgangsöffnungen 19' des inneren ersten Schottblechs 20 am weitesten außen. Die Durchgangsöffnungen 19'" des äußeren dritten Schottblechs am weitesten innen und die Durchgangsöffnungen 19" des mittleren zweiten Schottblechs dazwischen.

Vertikal liegen die Durchgangsöffnungen 19'" des dritten Schottblechs am weitesten außen.

Da das mittlere Schottblech 21 über seinen oberen ersten Kantenabschnitt 33 an der Schaltfeldtür fixiert und sein unterer Kantenabschnitt 43 verschiebbar ist, wurden seine Durchgangsöffnungen 19" in den oberen Teilflächen 56" und 57" vertikal zwischen den Durchgangsöffnungen 19'und 19'" der beiden anderen Schottbleche und in den unteren Teilflächen 58" und 59" vertikal am weitesten innen angeordnet.

Entsprechend wurden die Durchgangsöffnungen 19'des ersten Schottblechs 20 in den oberen Teilflächen 56' und 57'vertikal am weitesten innen und in den unteren Teilflächen 58' und 59' vertikal zwischen den Durchgangsöffnungen 19" und 19'" der beiden anderen Schottbleche angeordnet.

Der Luftstrom wird im Störfall durch den Versatz der Durchgangsöffnungen 19', 19" und 19'" und durch das Aufbiegen der Krümmungen 30, 31 der Schottbleche 20, 21 stark eingeengt. Die Einengung erfolgt so weit, dass der auftretende heiße Gasstrom dabei zwischen den drei Schottblechen - insbesondere zwischen den in ihrer Endlage im Störfall eng an der Schaltschranktür anliegenden ersten 20 und zweiten 21 Schottblechen - verwirbelt und gekühlt wird. Eine Gefährdung von Personen im Frontbereich des Schaltfeldes ist dadurch sicher ausgeschlossen.

Da die Lösung nicht vollständig gasdicht ist, ergibt sich außerdem ein teilweiser Druckabbau, was sich wiederum vorteilhaft auf die mechanische Belastung der Umhüllungsteile der Anlage auswirkt.

Die Wirkungsweise der neuen Schottvorrichtung 18 ist unabhängig von der Richtung der sich im Feld ausbreitenden Druckwelle. Die neue Schottvorrichtung ist resistent gegen mechanische Beschädigungen, da sich die gebogenen Bleche nur schwer verformen lassen. Bei einem zufälligen dagegen Schlagen während Wartungs- oder Installationsarbeiten durch Monteure sind daher keinerlei Beschädigungen zu erwarten. Die neue Schottvorrichtung ist wartungsfrei, da keine lediglich eingelegten Gewebe oder beweglichen Klappen verwendet werden, deren Lage kontrolliert werden müsste. Die neue Schottvorrichtung gewährleistet einen kontrollierten Druckabbau im Störlichtbogenfall.

## Patentansprüche

1. Schottvorrichtung (18) für eine Stromverteilereinheit (1), mit Schottmitteln zum Hinterlegen eines mit Lüftungsöffnungen (17) versehenen Umhüllungsteiles (8) der Stromverteilereinheit, insbesondere einer Schaltfeldtür, wobei die Schottmittel derart ausgebildet sind, dass sie unter normalen Betriebsbedingungen einen Luftstrom durch die Lüftungsöffnungen (17) hindurch ins Innere der Stromverteilereinheit oder aus dem Inneren der Stromverteilereinheit gewährleisten und im Störfall unter dem Einfluss einer Druckwelle die Lüftungsöffnungen (17) so abdecken, dass die Druckwelle und heißen Gase stark vermindert nach außen geleitet werden,
**dadurch gekennzeichnet, dass** als Schottmittel zumindest ein erstes Schottblech (20) und ein zweites Schottblech (21) vorgesehen sind, die jeweils mit Durchgangsöffnungen (19', 19") versehen und übereinander angeordnet sind,
wobei die beiden Schottbleche (20, 21) ausgehend von dem mit den Lüftungsöffnungen (17) versehenen Umhüllungsteil unterschiedlich stark konvex gekrümmt sind,
und wobei die Krümmungsradien (30, 31) der Schottbleche (20, 21) durch Verbiegen der Schottbleche unter dem Einfluss der Druckwelle veränderbar sind.

2. Schottvorrichtung nach Anspruch 1,
**dadurch gekennzeichnet, dass** über den beiden Schottblechen (20, 21) ein drittes Schottblech (22) angeordnet ist, dass ebenfalls konvex gekrümmt und mit Durchgangsöffnungen (19"') versehen ist.

3. Schottvorrichtung nach einem der Ansprüche 1 oder 2,
**dadurch gekennzeichnet, dass** zumindest jeweils ein senkrecht zum Krümmungsradius(30; 31; 32) verlaufender erster Kantenabschnitt (33; 34; 35) der Schottbleche ortsfest an dem Umhüllungsteil (8) gehalten ist.

4. Schottvorrichtung nach einem der Ansprüche 1 bis 3,
**dadurch gekennzeichnet, dass** zumindest jeweils ein senkrecht zum Krümmungsradius (30; 31) verlaufender zweiter Kantenabschnitt (43; 44) des ersten und des zweiten Schottbleches verschiebbar an dem Umhüllungsteil gehalten ist.

5. Schottvorrichtung nach Anspruch 4,
**dadurch gekennzeichnet, dass** dass die zweiten Kantenabschnitte (43, 44) in entgegen gesetzten Richtungen (42, 48) verschiebbar sind.

6. Schottvorrichtung nach einem der Ansprüche 1 bis 5,
**dadurch gekennzeichnet, dass** die Durchgangsöffnungen (19', 19", 19"') der verschiedenen Schottbleche derart angeordnet sind, dass sie im Störfall einen größeren Versatz zueinander aufweisen als unter normalen Betriebsbedingungen.

7. Schottvorrichtung nach Anspruch 1 bis 6,
**dadurch gekennzeichnet, dass** die Durchgangsöffnungen (19', 19", 19"') bei jedem der Schottbleche jeweils in mehreren, vorzugsweise sechs Teilflächen (56' bis 61'; 56" bis 61''; 56'" bis 61"') der Mantelfläche des Schottbleches konzentriert sind, wobei einander zugeordnete dieser Teilflächen (56', 56" und 56"' bis 61', 61" und 61"') der verschiedenen Schottbleche im Wesentlichen übereinander liegen.

8. Schottvorrichtung nach Anspruch 6,
**dadurch gekennzeichnet, dass** bei jedem der Schottbleche (20, 21, 22) die Summe seiner Teilflächen (56' bis 61'; 56" bis 61''; 56'" bis 61"') in denen die Durchgangsöffnungen konzentriert sind, geringer als 1/10 der gesamten Mantelfläche des Schottbleches ist.

9. Schottvorrichtung nach einem der Ansprüche 1 bis 8,
**dadurch gekennzeichnet,** d as s zwei sich senkrecht zu den Schottblechen (20, 21, 22) erstreckende, Seitenschotts (23, 23) vorgesehen sind, die die Stirnseiten der Schottbleche abdecken.

10. Schottvorrichtung nach Anspruch 9,
**dadurch gekennzeichnet, dass** die Seitenschotts (23) jeweils zumindest eine erste Abkantung (49) zum Befestigen der Seitenschotts an dem Umhüllungsteil (8) aufweisen.

11. Schottvorrichtung nach einem der Ansprüche 9 oder 10,
**dadurch gekennzeichnet, dass** die Seitenschotts (23) jeweils zumindest eine zweite Abkantung (52, 53, 54) zum Übergreifen der Schottbleche aufweisen.

12. Stromverteilereinheit(1), insbesondere Schaltfeld, mit einem mit Lüftungsöffnungen (17) versehenen Umhüllungsteil (8), insbesondere einer Schaltfeldtür, und mit einer an einer Innenseite des Umhüllungsteiles (8) angeordneten Schottvorrichtung (18),
**dadurch gekennzeichnet, dass** die Schottvorrichtung nach einem der Ansprüche 1 bis 11 ausgebildet ist.

## Claims

1. Partition apparatus (18) for an electrical power distributor unit (1) having partition means for backing a cladding part (8) of the electrical power distributor unit, in particular a control panel door, provided with ventilation openings (17), wherein the partition means are embodied such that under normal operating conditions they ensure a flow of air through the ventilation openings (17) into the interior of the electrical power distributor unit or out of the interior of the electrical power distributor unit and in the event of a fault caused by a pressure wave, cover the ventilation openings (17) such that the pressure wave and hot gases are conveyed outwards to a significantly reduced degree,
**characterised in that**
at least a first partition sheet (20) and a second partition sheet (21) are provided as partition means, each of which is provided with through openings (19', 19") and is arranged one above the other,
wherein the two partition sheets (20, 21) are have a different curvature in a convex shape based on the cladding part provided with the ventilation openings (17),
and wherein the curvature radii (30, 31) of the partition sheets (20, 21) can be changed by the bending the partition sheets caused by the pressure wave.

2. Partition apparatus according to claim 1,
**characterised in that**
a third partition sheet (22) is arranged above the two partition sheets (20, 21), which is likewise curved in a convex shape and provided with through openings (19"').

3. Partition apparatus according to one of claims 1 or 2,
**characterised in that**
at least one first edge section (33; 34; 35) of the partition sheet running at right angles to the curvature radius (30; 31; 32) is held on the cladding part (8) in a fixed manner in each instance.

4. Partition apparatus according to one of claims 1 to 3,
**characterised in that**
at least a second edge section (43; 44) of the first and second partition sheet which runs at right angles to the curvature radius (30; 31) in each instance can be displaceably held on the cladding part.

5. Partition apparatus according to claim 4,
**characterised in that**
the second edge sections (43, 44) can be moved in opposite directions (42, 48).

6. Partition apparatus according to one of claims 1 to 5,
**characterised in that**
the through openings (19', 19", 19"') of the displaced partition sheets are arranged such that in the event of a fault they have a greater offset than under normal operating conditions.

7. Partition apparatus according to claim 1 to 6,
**characterised in that**
the through openings (19', 19", 19"') in the case of each of the partition sheets are each concentrated in several, preferably six partial surfaces (56' to 61'; 56" to 61"; 56"' to 61"') of the lateral surface of the partition sheet, wherein these partial surfaces (56' to 61'; 56" to 61"; 56"' to 61"') of the different partition sheets assigned to one another essentially lie one above the other.

8. Partition apparatus according to claim 6,
**characterised in that**
with each of the partition sheets (20, 21, 22), the total of their partial surfaces (56' to 61'; 56" to 61"; 56"' to 61"') in which the through openings are concentrated, is less than 1/10 of the entire lateral surface of the partition sheet.

9. Partition apparatus according to one of claims 1 to 8, **characterised in that**
two lateral partitions (23, 23) extending at right angles to the partition sheets (20, 21, 22) are provided, which cover the front faces of the partition sheet.

10. Partition apparatus according to claim 9,
**characterised in that**
the lateral partitions (23) each comprise at least one first edge (49) for fastening the lateral partition to the cladding part (8).

11. Partition apparatus according to one of claims 9 or 10,
**characterised in that**
the lateral partitions (23) each comprise at least one second edge (52, 53, 43) for covering the partition sheet.

12. Electrical power distributor unit (1), in particular control panel, having a cladding part (8) provided with ventilation openings (17), in particular a control panel door, and having a partition apparatus (18) arranged on an interior of the cladding part (8),
**characterised in that**
the partition apparatus is embodied according to one of claims 1 to 11.

## Revendications

1. Dispositif de cloisonnement (18) pour une unité de distribution de courant (1), comportant des moyens de cloisonnement destinés à être placés derrière une partie d'habillage (8) de l'unité de distribution de courant pourvue d'ouvertures d'aération (17), et plus particulièrement derrière une porte de tableau de distribution, les moyens de cloisonnement étant réalisés de manière telle qu'ils assurent, dans des conditions de service normales, un courant d'air traversant les ouvertures d'aération (17) pour arriver à l'intérieur de l'unité de distribution de courant ou pour sortir de l'intérieur de l'unité de distribution de courant et que, en cas d'incident, ils recouvrent, sous l'effet d'une onde de choc, les ouvertures d'aération (17) de manière telle que l'onde de choc et des gaz brûlants sont acheminés vers l'extérieur sous une forme réduite, **caractérisé en ce que** sont prévues, en tant que moyens de cloisonnement, une première tôle de cloisonnement (20) et une deuxième tôle de cloisonnement (21) qui sont respectivement pourvues d'ouvertures de passage (19', 19") et sont superposées, les deux tôles de cloisonnement (20, 21) étant incurvées de manière à présenter une convexité différente au départ de la partie d'habillage pourvue des ouvertures d'aération (17) et les rayons de courbure (30, 31) des tôles de cloisonnement (20, 21) étant variables par flexion des tôles de cloisonnement sous l'effet de l'onde de choc.

2. Dispositif de cloisonnement selon la revendication 1, **caractérisé en ce qu'**est située, au-dessus des deux tôles de cloisonnement (20, 21), une troisième tôle de cloisonnement (22) qui présente également une courbure convexe et est pourvue d'ouvertures de passage (19"').

3. Dispositif de cloisonnement selon l'une des revendications 1 ou 2, **caractérisé en ce qu'**au moins respectivement une première partie de bord (33 ; 34 ; 35) des tôles de cloisonnement verticale par rapport au rayon de courbure (30 ; 31; 32) est maintenue de manière stationnaire sur la partie d'habillage (8).

4. Dispositif de cloisonnement selon l'une des revendications 1 à 3, **caractérisé en ce qu'**au moins respectivement une deuxième partie de bord (43 ; 44) des première et deuxième tôles de cloisonnement verticale par rapport au rayon de courbure (30 ; 31) est maintenue de manière coulissante sur la partie d'habillage.

5. Dispositif de cloisonnement selon la revendication 4, **caractérisé en ce que** les deuxièmes parties de bord (43, 44) peuvent coulisser dans des sens opposés (42, 48).

6. Dispositif de cloisonnement selon l'une des revendications 1 à 5, **caractérisé en ce que** les ouvertures de passage (19', 19", 19"') des différentes tôles de cloisonnement sont agencées de manière telle qu'en cas d'incident elles présentent un décalage entre elles qui est plus important que dans des conditions de service normales.

7. Dispositif de cloisonnement selon l'une des revendications 1 à 6, **caractérisé en ce que** les ouvertures de passage (19', 19", 19"') sont concentrées, pour chacune des tôles de cloisonnement, respectivement sur plusieurs surfaces partielles, de préférence au nombre de six (56' à 61' ; 56" à 61"; 56"' à 61"') de la surface latérale de la tôle de cloisonnement, les surfaces partielles des différentes tôles de cloisonnement qui sont associées entre elles (56' , 56" et 56"' à 61' , 61" et 61"') étant sensiblement superposées.

8. Dispositif de cloisonnement selon la revendication 6, **caractérisé en ce que**, pour chacune des tôles de cloisonnement (20, 21, 22), la somme de ses surfaces partielles (56' à 61' ; 56" à 61"; 56"' à 61"') sur lesquelles les ouvertures de passage sont concentrées est inférieure à 1/10 de la surface latérale totale de la tôle de cloisonnement.

9. Dispositif de cloisonnement selon l'une des revendications 1 à 8, **caractérisé en ce que** sont prévues deux cloisons latérales (23, 23) qui s'étendent perpendiculairement aux tôles de cloisonnement (20, 21, 22) et qui recouvrent les faces frontales des tôles de cloisonnement.

10. Dispositif de cloisonnement selon la revendication 9, **caractérisé en ce que** les cloisons latérales (23) présentent respectivement au moins un premier repli (49) pour fixer les cloisons latérales à la partie d'habillage (8).

11. Dispositif de cloisonnement selon l'une des revendications 9 ou 10, **caractérisé en ce que** les cloisons latérales (23) présentent respectivement au moins un deuxième repli (52, 53, 54) pour s'engager pardessus les tôles de cloisonnement.

12. Unité de distribution de courant (1), et plus particulièrement tableau de distribution, avec une partie d'habillage (8) pourvue d'ouvertures d'aération (17), et plus particulièrement une porte de tableau de distribution, et avec un dispositif de cloisonnement (18) situé sur le côté intérieur de la partie d'habillage (8), **caractérisée en ce que** le dispositif de cloisonnement est réalisé selon l'une des revendications 1 à 11.
